# EUROPEAN PATENT APPLICATION

(11) **EP 3 002 938 A1**
(43) Date of publication of application: **06.04.2016**
(21) Application number: 14187313.3
(22) Date of filing: 01.10.2014
(51) Int. Cl.: H04M 3/51

(54) **Customer interaction centre**

(71) Applicant: The Voxtron Factory N.V., 9140 Temse (BE)
(72) Inventor: Van Houts, Wim, 9120 Beveren (BE)
(74) Representative: Plas, Axel Ivo Michel

(57) **Abstract**

According to an embodiment the invention relates to a customer interaction centre (100) for establishing and conducting customer interaction processes or CIPs with customers (135, 136) comprising one or more interaction modules (101, 102, 103) each configured to establish or accept a connection of a certain interaction type with these customers; comprising client agents (130, 131, 132) providing communication means to operators (140, 141, 142); comprising an application memory store (112) storing predefined CIP applications represented by a related listing of tasks; comprising a library memory store (111) storing implementations of these tasks; and comprising a run-time controller (113) configured to receive an interaction request for an interaction between a first customer and operators; and to retrieve a first CIP application for a first interaction type from the application memory store (112); and to fetch select tasks from the library memory store (111); and to execute them.

## Description

### Technical Field

The current disclosure relates to the field of customer interaction centres. Such a centre provides the technical means to connect a customer with an available operator. The complete procedure from the initial request for an interaction to the ending of the interaction is defined as an interaction process. The initial request for an interaction may come from the outside, i.e., from a customer, and is referred to as an inbound interaction request. When the initial request originates from within the centre, it is referred to as an outbound interaction request. In such a case, the incentive is to contact a customer from within the customer interaction centre. The interaction itself is conducted by one or more technical means of communication, e.g., by voice, (web)chat, video, email.

### Background

A typical example of a customer interaction process handled by a customer interaction centre is when a customer dials the support line of a company. Upon calling, the customer gets connected to an interactive voice response system or IVR where he is requested to input information. Inputting information may be done by voice, but also by DTMF tones generated by a keypad. Based on the information, further user information may be retrieved from a customer database such as a Customer Resource Management system or CRM system. A routing system then routes the call of the customer to an available operator. The switching logic is typically implemented by a private branch exchange system, generally referred to as a PBX. In order to select the appropriate operator in an intelligent way, skilled based routing logic such as disclosed in the patent application publication US5825869 may be used. In skilled based routing an operator is not only selected based on his availability but also based on his skills for handling a customer's request. The needed skills to handle the request may be automatically derived from the input provided by the customer.

In recent years, customer interaction centres have evolved rapidly into very complex but flexible systems. One evolution is the decentralization of interaction centres where parts of the interaction centres are hosted in different geographical locations. Operators with their client computing devices may be located in one or different locations while the incoming requests and routing is handled by a system in another location, for example in a central location managed by a customer interaction centre service provider. A second evolution is virtualization where all communication, switching and routing logic is running on virtualized servers allowing quick and easy scaling of customer interaction centres. A third evolution is the introduction of new communication technologies in the customer interaction centres. In the earlier days, customer interaction centres were nothing more than intelligent PBXs where a customer could only contact an operator over a traditional fixed telephone line. Nowadays, a customer can interact by telephone, GSM, chat, social media, email, apps installed on smartphones and tablets, etc.

This evolution has led to an increased complexity in the setup and configuration of customer interaction centres. On the one hand, the setup and configuration of an interaction centre and the implementation of specific customer interaction processes involves technical expertise for configuring all components in the system. The definition of a customer interaction process on the other hand is typically done by business managers having no technical expertise in the domain of interaction centres. The translation of a customer interaction process from a high level requirement or definition into specific component settings and configurations may therefore be a long, expensive and tedious process. There is thus a need to configure a customer interaction centre in a quick and straightforward manner, preferably without technical expertise.

In the patent application publication WO2005093618 a similar need is mentioned and a Graphical User interface is disclosed providing several steps to a non-technical user in order to define a customer interaction process that is then converted into a configuration of the system. However, it does not disclose how the generated graphics can be converted into a configuration of the components of the interaction centre.

In the patent application publication WO2004038596 a same need is expressed: "It would be beneficial to provide a high-level design tool for defining and provisioning a call center, and to push out the design tool's interface to a subscriber, to enable the subscriber to self-provision and administer a call center using non-technical employees, with little involvement by the service provider, such as an ASP or a Telco". However, the disclosure only relates to the prioritization of calls and an accompanying Graphical User Interface or GUI in order to define this prioritization.

### Summary of the Invention

The object of the current invention is to present alternatives to the above solutions and to overcome their shortcomings. This object is achieved by a customer interaction centre or CIC for establishing and conducting customer interaction processes or CIPs with customers. This CIC comprises:
- One or more interaction modules each configured to establish or accept a connection of a certain interaction type with the customers, and to connect these customers further to client agents.
- The client agents providing communication means for these interaction types to operators.
- An application memory store storing predefined customer interaction process or CIP applications. Such a CIP application then represents a customer interaction process by a related listing of tasks.
- A library memory store storing executable implementations of these tasks.
- A run-time controller configured to:
   o Receiving an interaction request for initiating an interaction between a first customer and one of the operators.
   o Subsequently retrieving a first CIP application for a first interaction type from the application memory store.
   ∘ Subsequently fetching select tasks of the first CIP application from the library memory store and executing the select tasks as determined by the related listing. A first task of the select tasks comprises connecting this first customer with a select client agent by a first interaction module.

A customer interaction process is thus represented by a related listing of tasks. The implementation of such a task is not defined in the CIP application but stored in a separate library thereby defining an abstraction layer as the implementation details of the tasks are hidden from the interaction process itself. Within the implementation of the tasks further instructions or commands are then provided to the interaction modules and the client agents. This allows a non-technical person to construct a customer interaction process without having knowledge of the implementation details of the specific tasks, it thus suffices to have knowledge on the function they fulfil rather than on how they function. At design-time, the CIP applications can thus be designed before the customer interaction centre is setup or configured. It suffices to know which tasks will be at hand to define a customer interaction process that can run on the customer interaction centre. The other way around, new or updated customer interaction processes can be introduced into an existing customer interaction centre without changing the underlying system as long as the tasks are at hand in the library memory store.

In a related listing of tasks, the tasks are logically interconnected where certain tasks may be executed one after the other, in parallel, or only when certain conditions are met. Such a related listing may be done according to a modelling language understandable to non-technical people such a business analysts while offering great flexibility. An example of such a language is the Business Process Modelling Notation or BPMN developed by the Business Process Management Initiative (BPMI) and maintained by the Object Management Group. It is an advantage that a model easily understood by non-technical people can be directly used by the run-time controller without complex translation steps, i.e., without having to reconfigure the customer interaction centre or to translate the model into an actual configuration.

According to embodiments, the interaction modules may comprise a voice interaction module, a mail interaction module, and messaging interaction module, a social media interaction module and/or a chat interaction module each for a respective interaction type. Specific tasks are then available from the library memory store for functionality provided by these specific interaction modules.

According to an embodiment, the first interaction module is configured to receive customer initiated interaction requests of a first interaction type from customers. The run-time controller is then further adapted to:
- Receive this first interaction request as a first customer initiated interaction request of the first customer from the first interaction module together with addressing information.
- identify the first CIP application from a memory store listing customer interaction processes for different interaction types and for different addressing information.

In other words, when an interaction module receives an interaction request from a customer, it forwards this request to the controller together with addressing information of the customer. The addressing information together with the interaction type of the request then determines which customer interaction process application will be retrieved from the application memory store. By linking the CIP applications with the addressing information in the memory store, interaction processes can be tailored to specific types of customers while the CIP application itself can remain free of any customer specific tasks such as comparing addresses. For example, one CIP application can be dedicated to important or premium customers for which a specific CIP application is available.

Advantageously, the addressing information comprises a source address of the customer such as for example his telephone number or email address. The addressing information may also relate to the destination address of the interaction request, e.g., did the customer call a technical support line or the general number.

According to an embodiment, the tasks further comprise configuration parameters and/or input parameters and/or output parameters.

This allows generalizing the implementation of tasks thereby limiting the amount of tasks while keeping flexibility. A configuration parameter is a parameter which is determined at design-time. In other words, a configuration parameter remains the same each time a certain CIP application is ran. Input and output parameters one the other hand are run-time dependent and typically change each time a CIP application is performed by the run-time controller.

A customer interaction process application may further comprise global variables. The executing then further comprises:
- Keeping track of these global variables.
- Providing one of these global variables or one of these output parameters as input parameters to one or more of the select tasks.

Global variables keep track of the state of the CIP application during its run-time. They can keep information during the execution of the tasks. This allows defining more complex interaction processes without changes to the implementation of the tasks themselves.

According to a preferred embodiment, the customer interaction centre further comprises a contact router module adapted to select an available client agent. The select tasks then comprise a second task to query this contact router for the select agent.

A contact router provides logic to determine an available client agent and thus an operator within a customer interaction process. Through the tasks, a query to the contact router for an available agent can be performed. A contact router may for example be a skill based contact router that determines the selected agent not only on availability but also on the skills that the operator should possess.

According to a further embodiment, the first interaction module is adapted to provide automated responses to customers. The select tasks comprise a third task to provide an automated response to the first customer.

One of the first tasks in a customer interaction process can be to provide an automated response. This may be done for different interaction types. When a customer is calling, an IVR which is part of the voice interaction module may be commanded by the third task to provide an automated voice response to the customer. When a customer is sending an email, the email server may be instructed to send a predefined email in response as part of this third task.

As all decision taking is performed centrally by the controller instead of by the different modules, a customer interaction process can be changed easily be adapting the application without changing the implementation of the underlying tasks in the specific interaction modules.

According to a second aspect, the disclosure relates to a computer implemented method for establishing and conducting customer interaction processes (CIP) with customers in a customer interaction centre; the method comprising the following steps:
- Receiving an interaction request for initiating an interaction between a first customer and one of operators. One or more interaction modules in the customer interaction centre are configured to establish or accept a connection of a certain interaction type with the customers and to connect the customers further to client agents providing communication means for the interaction types to the operators.
- Retrieving a first CIP application for a first interaction type from an application memory store storing predefined customer interaction process or CIP applications representing a customer interaction process by a related listing of tasks.
- Fetching select tasks of the first CIP application from a library memory store storing executable implementations of these tasks.
- Executing the select tasks as determined by the related listing. A first task of the select tasks further comprises connecting the first customer with a select client agent by a first interaction module.

According to a third aspect, the disclosure relates to a computer program product comprising computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according to the second aspect.

### Brief Description of the Drawings

Fig. 1 illustrates a customer interaction centre for conducting customer interaction processes according to an embodiment; and
Fig. 2 illustrates a subset of Business Process Modelling Notation or BPMN symbols for representing a customer interaction process application; and
Fig. 3-a shows an illustrative example of the use of an exclusive gateway; and

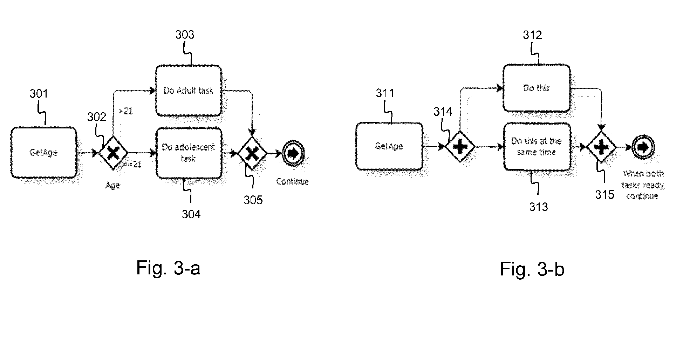

Fig. 3-b shows an illustrative example of the use of a parallel gateway; and

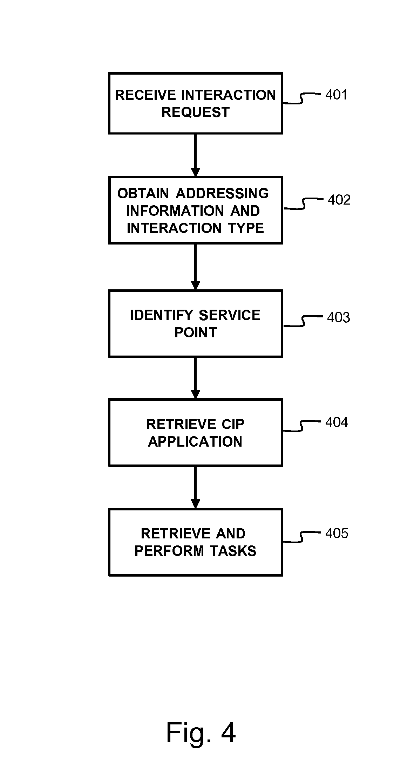

Fig. 4 shows a flow performed by a controller in an customer interaction centre according to an embodiment; and

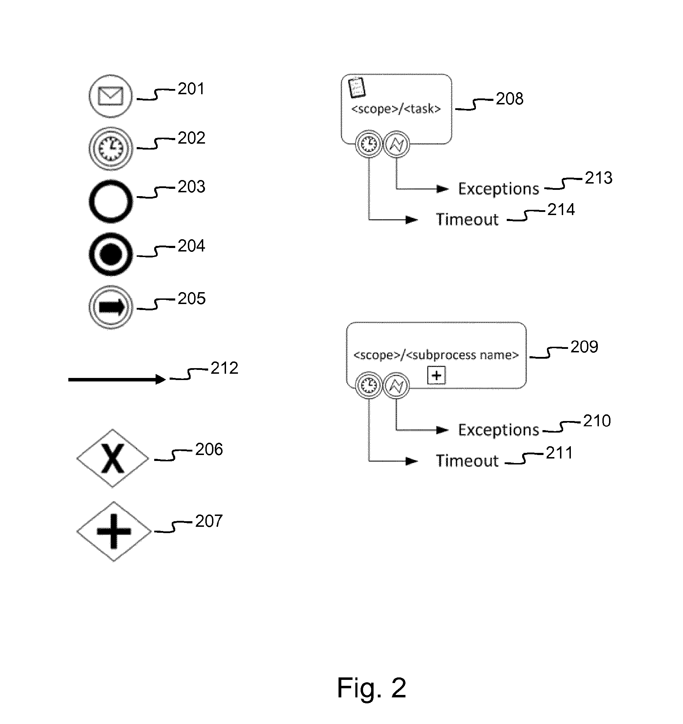

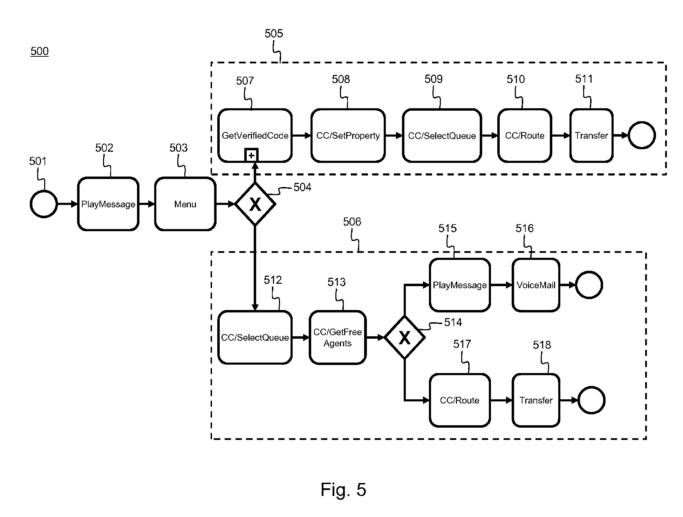

Fig. 5 shows a graphical representation using the subset of symbols of Fig. 2 of a customer interaction process application for conducting a customer interaction process; and

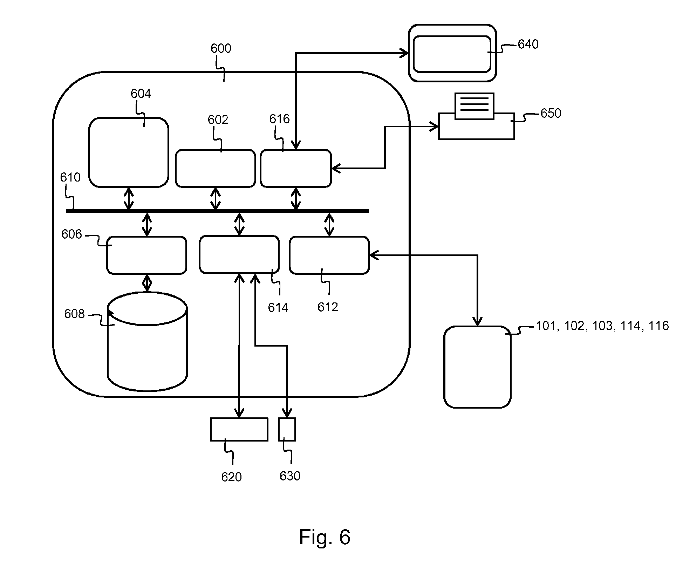

Fig. 6 illustrates a computing system according to an embodiment.

### Detailed Description of Embodiment(s)

The current disclosure relates to Customer Interaction Processes or CIPs. A CIP is defined as all the steps in a communication session between a customer and a Customer Interaction Centre or CIC. A CIC provides all technological means to establish and conduct the CIP either by providing an automatic response to the customer and/or by connecting the customer with a human operator that can provide information requested by the customer. A CIC is typically provisioned for a certain company that desires to provide a contact point to its customers. In the field, a Customer Interaction Centre is also referred to as a Contact Centre.

A CIC may be an inbound CIC, an outbound CIC or a combination of the two. In an inbound CIC, the CIP is initiated by the customer and the request to setup a communication session is thus initiated from outside the CIC by an inbound interaction request. In an outbound CIC, the CIP is initiated by the CIC itself and the request to setup a communication session is thus initiated from inside the CIC by an outbound interaction request.

A CIP may be conducted by one or more interaction types, i.e., by certain type of communication means. Nowadays, CICs do not only support telephony as an interaction type. Other offered interaction types are for example email, web chat, social media, SMS or Short Message Service, voice and video communication over IP using the Session Information Protocol or SIP protocol. During the CIP, the interaction type may change. For example, a customer may send a text message to a CIC upon which an operator calls him back to continue the interaction process.

When a customer communicates with an operator during a CIP, the operator does this through a client agent offering all technical means in order to communicate with the client by one or more interaction types. Typically, the client agent will comprise a desktop computer, a telephone and/or headset. Apart from offering communication means, the client agent may further provide additional information about the CIP to the operator.

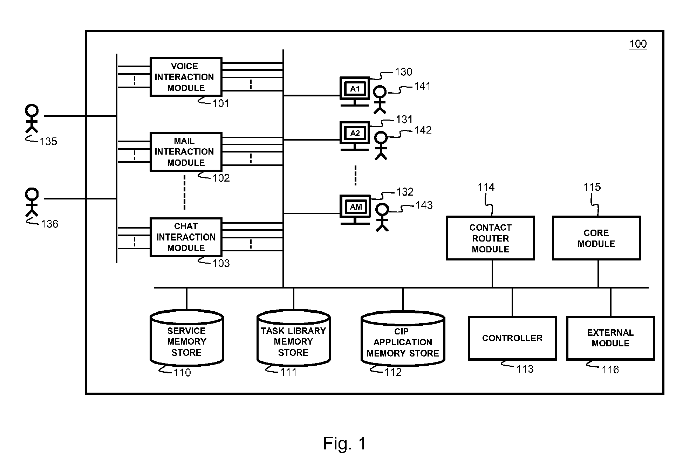

Fig. 1 illustrates a customer interaction centre 100 or CIC 100 according to an embodiment. The CIC 100 comprises one or more Interaction Modules or IMDs 101, 102, 103. Each interaction module comprises the means and logic resources to setup and conduct a communication of a certain interaction type with a customer 135, 136. The communication may be done automatically or by an operator 141-143. When requested, an interaction module may connect a customer 135, 136 with one of the operators 141-143 through their respective client agents 130-132.

According to an embodiment, one of the interaction modules 101-103 may be a voice interaction module 101 for handling telephone based interactions. The voice interaction module may accept inbound request from customers by receiving telephone calls or initiate outbound request initiated from within the CIC by dialling telephone numbers upon request of the CIC. This functionality may be provided by a PBX or Private Branch exchange system. The voice interaction module may further be configured to provide automated responses when a communication session with a customer 135, 136 is established. During such an automated response, an automated inquiry can be conducted with a customer 135-136 in order to obtain additional information from the customer 135, 136. Such a functionality may be provided by an IVR or Interactive Voice Response system. Typically, IVR functionality can be integrated in the PBX system. Further information from the voice interaction module may be provided by CTI or Computer Telephony Integration providing computer network access to the PBX and/or IVR system. Alternatively, the voice interaction module may also be IP based using for example the SIP protocol for routing of voice data in the CIC 100. In this case, the automated response functionality in the voice interaction module may be provided by a web server supporting the VoiceXML digital document standard.

One of the interaction modules 101-103 may also be a mail interaction module 102 providing interaction with customer through a mail interaction type and thus by email. This functionality may be provided by a mail server configured to receive email from the customers 135, 136 or to send email originating from the client agents 130-132 or automatically composed by the mail interaction module itself. The mail interaction module may further provide logic resources to extract information from received email messages.

For interaction processes conducted by chatting, there may further be a chat interaction module 103 in the CIC 100. The chat interaction type may be provided to customers for dedicated chatting applications or for chatting applications embedded in web applications such as in a company's web portal or through third party web applications such as those offered by social media providers.

Similarly, other interaction modules for other interaction types may be provided such as a messaging interaction module for interactions by SMS or Short Message Service, or such as a social media interaction module for interaction through social media service providers. Such a social media interaction module may then be configured to receive messages from customers posted on social media such as Facebook or Twitter.

The CIC 100 according to the embodiment of Fig. 1 further comprises a contact router or contact router module 114. This contact router 114 provides routing functionality to the CIC 100. When, during an interaction process, a customer needs to be forwarded to an available operator, the contact router will select the available operator. The contact router 114 is thus responsible for finding the right agent for the job when a customer contacts an organization or company. Different contact router topologies are known in the art and may involve queueing and skill based routing. Making the routing decision may for example be performed in 2 stages: in the first stage, a particular 'queue' is selected which limits the number of target users to those who are logged in for this particular queue. An example is a 'Support' queue that groups all the people in the CIC 100 that can handle support questions. Within the context of this queue, the second stage in the routing will identify a suitable agent by matching the skills of the customer with the skills of the agent. This may be language skills, knowledge on a particular supported product, required expertise level, etc. The CIC 100 may further comprise a core module 115 and external modules 116 as will be set out below.

The CIC 100 further comprises a task library memory store 111 storing implementations of tasks that are executable in runtime controller 113 during execution of a customer interaction process. For each of the modules, i.e. interaction modules 101-103, contact router 114, core module 115 and possible other modules 116, a set of tasks is available in the memory store 111. Within the implementation of the tasks computation logic of the respective modules is triggered and executed in order to perform the respective task. Each task then has a unique name in order to identify the task. Preferably, the name is descriptive such that the function of the task is derivable from its name. The task may further have the following data associated with it:
- An icon as a symbolic representation of the task. Such an icon may be used for graphically representing a task within customer interaction processes.
- Inputs: parameters that are provided to the task for use during the execution of the task.
- Outputs: these are parameters that are produced by the task and may further be used during a CIP.
- Configurations: parameters used to configure a task in a customer interaction process allowing reusing tasks.
- Exceptions: if a task cannot perform what it is supposed to do, it can throw an exception indicating the failure to execute the task and thus the failure to generate the required outputs.

The CIC 100 further comprises an application memory store 112 storing customer interaction process applications, further referred to as CIP applications. A CIP application is a definition of a customer interaction process in terms of the tasks that are to be executed in order to conduct the customer interaction process. The CIP application also defines the relation between the tasks, i.e., when they are to be executed and on which condition. A CIP application starts by a request for an interaction either by inbound interaction request or by an outbound interaction request. A CIP application also has a specific end point, for example when the interaction process is terminated or when a customer is successfully routed to an available operator. A CIP application can be seen as a flow of tasks between a starting event, i.e., inbound or outbound request, and an ending event. All tasks in the CIP application follow a certain flow defining a related listing of the tasks.

In order to graphically represent a CIP application and to illustrate the possible properties and features of a CIP application stored by the memory store 112 a subset of the Business Process Modelling Notation or BPMN will be used. The BPMN was developed by the Business Process Management Initiative or BPMI and now maintained by the Object Management Group. The icons of the used subset is shown in Fig. 2. The used event items are shown as icons 201 till 205:
- The Start Message Event 201, determines the start of the customer interaction process and thus of the CIP application. The event 201 thus corresponds to an inbound or outbound interaction request.
- The Intermediate Timer Event 202 can be used in a CIP flow to suspend the flow such that it doesn't progress for a specified amount of time.
- The Normal End Event 203 may be used to indicate that a particular path in the CIP flow has ended without necessarily ending the actual CIP application.
- The Terminate End Event 204 may be used to end all activity in the CIP flow. In contrast to the event 203 is does not only end the activity in a current path. As explained below, multiple paths, possibly running in parallel, may be created using a parallel gateway.
- The Intermediate Link Event 205 links different flows into one single CIP flow. This event does not add actual logic to a CIP application but is only used for sake of representation. It allows a user to properly organize complex CIP flows over multiple pages.

A task itself is represented by a rounded rectangle icon 208 where the name of the task is written inside. The scope of the task may be added before the slash to indicate that the name belongs to the tasks of a specific module. This way, task names may be reused for different modules. Apart from its inputs and outputs, a task 208 may also return an exception 213 or a timeout event 214. The timeout 214 monitors the duration of the task and stops its execution if the timer expires before the task is finished. A separate timeout flow or tasks in the CIP application may then be executed. When a task throws an exception 213 the task is stopped and an exception flow may be started.

An arrow 212 indicates a normal sequence of the CIP flow and thus of the CIP application. The arrow indicates the actual direction of progress in the CIP application.

A task may be followed by an exclusive gateway 206. This gateway will act similar as a 'switch' statement as known from programming languages such as C or C++. In an exclusive gateway, a variable which is typically set by a previous task is compared with 2 or more values. The variable that is used in the comparison may be shown as the name of the gateway. An example of an exclusive gateway is shown in Fig. 3-a where a part of a flow is shown. In a first task 301 the age of a person is retrieved. In the exclusive gateway 302, the flow proceeds either to the above task 303 or the below task 304 depending on whether the retrieved age is respectively above 21 or not. Two different paths in a flow may also be merged by a gateway 305.

Similarly, a parallel gateway 207 may be used to split a CIP flow into two parallel paths which get executed in parallel as illustrated by Fig. 3-b. There, after the retrieval of the age in task 311, the path is split in two by the parallel gateway 314. In each path, the respective tasks 312 and 313 are executed in parallel. A same parallel gateway 315 may be used to merge the paths back to one single path.

A CIP application may also comprise a sub process item 209 from BPMN in order to properly organise a flow. It allows reusing reoccurring sub flows and using several instances of such a sub process at different locations in the CIP application. A sub process 209 may further have timeouts 211 defined and capture exceptions 210 from tasks 208 in the sub process. The timeout 211 monitors the duration of the complete sub process and stops its execution if the timer expires before the sub process is finished. A timeout flow in the CIP application is then started. When one of the tasks in the sub process throws an exception that is not capture on the task level, the sub process execution is stopped and an exception flow is started.

Besides the application memory store 112 storing the CIP applications which may be represented by the subset of the BPMN according to the above embodiment, the CIC 100 may further comprises a service memory store 110. The store 110 relates customer interaction process applications with different interaction types and with different addressing information. This way, when an interaction request arrives in the CIC 100, it can be related to a matching CIP application in the application memory store 112.

According to a further embodiment, the service memory store 110 holds a number of service points as illustrated by the example in table 1 below. The first column identifies each service point by a logical name, which can be seen as a logical grouping of a set of service addresses. For example, a service point 'MyCompanySupport' may group the support phone number(s), e-mail support address and support web chat URL of and organization. Each service point configuration exists of a set of rules that are executed top-down and allow filtering of incoming interactions based on the interaction type in the second column and the addressing information in the third and fourth column as the source or "From" address and the destination or "To"Address.

**Table 1: Example of service points relating CIP applications with interaction types and addressing information**

| **Servive point name** | **Incoming interaction type** | **From Address** | **To Address** | **CIP Application** |
|---|---|---|---|---|
| HelpdeskVIP | Inbound Call | 013456789 | 03760404[0-2] | VIPSupportApp |
| Helpdesk | Inbound Call | * | 037604040 | SupportApp |
| SupportMail | Inbound email | * | support@mycompany.com | SupportApp |

Each rule and thus line in to table above also determines the CIP application that will handle the respective interaction by its name. The application is referred to by its logical name, so that service points and CIP applications may be administered separately, i.e., by loose binding. Preferably, the filter fields 'from address' and 'to address' support regular expressions allowing flexible selection of the desired values. More preferably the regular expressions are compliant with ECMA Scripting. The values for the 'from address' and 'to address' field are provided by the respective interaction modules.

The memory stores 110, 111 and 112 may already be populated with data at design time, i.e., before the CIC 100 is serving customer interaction requests. At run time, i.e., during the operation of the CIC 100 when customer interaction processes are to be served the data is used to perform the customer interaction processes. In order to perform the customer interactions processes as specified in the CIP applications, the CIC 100 comprises a controller 113 configured to perform steps in order to conduct the customer interaction processes.

Fig. 4 shows a flow illustrating steps performed by the controller 113 in order to establish and conduct a customer interaction process in the CIC 100. In a first step, a customer interaction request is received. An inbound interaction request may be received from one of the Interaction modules 101-103 depending on the type of interaction. An outbound interaction request may be generated by the CIC 100 itself, for example by a core module 115 or other decision logic that determines that a certain customer should be contacted at a certain point in time. In the next step 402 of the flow, addressing information and the interaction type is retrieved. For an inbound interaction request, this information will also be provided by the respective interaction module. In the following step 403, the CIP application defining the customer interaction process is identified from the service memory store 110 by comparing the received addressing information and interaction type with the values stored in the memory store 110.

In the next step 404, the controller 113 retrieves the identified CIP application from the application memory store 112. Then, in step 405, the CIP application is executed by performing the tasks as listed in the CIP application. Whenever a new task is to be performed, the controller retrieves the executable code for the task from the library memory store 111 and executes the task. Depending on the module to which the task relates, the execution of the task will trigger certain logic within the respective module.

During the execution of the CIP application, the controller 113 maintains a runtime environment in order to manage the customer interaction process. Every task in the CIP application may have a number of input and output parameters as specified in the definition of the task. Global variables may be defined in the CIP applications that persist during the execution of the CIP applications. Values of global variables may then be assigned to input parameters of a task, or, the other way around, output parameters of a task may be assigned to these global variables to keep the values at hand during the execution of the CIP application. Alternatively, output variables may also become available by default. Some variables may also be read-only variables that are by default available to the CIP application depending on the interaction type.

### Examples of modules and tasks for a CIC

As way of example a listing of modules and their respective tasks is provided below as an exemplary embodiment.

### Example module 1: Core module

The core module 115 holds some basic tasks that are available for each embodiment of a CIC 100. The designer of the CIP application always has these tasks at his disposal. Examples of basic tasks are listed in the table below. The first column gives the name of the task, the second column mentions the input parameters, the third column the output parameters and the fourth column the configuration parameters. The values of input and output parameters are unknown when designing the CIP application, while the configuration parameters are chosen when designing the CIP application and, thus, fixed during the execution of the CIP application.

**Table 2: Task with input, output and configuration parameters available form the core module.**

| **Name** | **Input** | **Output** | **Configuration** |
|---|---|---|---|
| SetVariable | Value | Variable | |
| Calculate | x, y | Result | +, -, *, /, <, <=, >, >=, equal, contains, startswith |
| CheckCalendar | Date, time | Open | Calendar |

The task 'SetVariable' is used to assign a 'Value' to a variable 'Variable'. The task 'Calculate' allows arithmetical calculations to be performed on variables that are available in the CIP application. The configuration parameter then defines the type of calculation. The 'CheckCalendar' task allows verifying a data and time against a calendar. It returns as output whether the data and/or time are still available. As configuration it takes a certain calendar.

### Example module 2: Voice interaction module

The table below lists the tasks available from the voice interaction module for both inbound and outbound interaction types.

**Table 3: Task with input, output and configuration parameters available from the voice interaction module for inbound and outbound interaction types**

| **Name** | **Input** | **Output** | **Configuration** |
|---|---|---|---|
| LanguageMenu | | selection | speech, repeat, repeatTO, excOnInvKey |
| Menu | | selection | speech, keys, repeat, repeatTO, excOnInvKey |
| PlayMessage | | | speech |
| GetCode | | code | speech, repeat, repeatTO |
| RecordSpeech | language | | speechMenu, speechOut |
| Voicemail | | | |
| SetListenable | | | |
| SetSurveyable | | | |
| SetRecordable | | | |
| StartRecording | | | |
| StopRecord ing | | | |
| Transfer | clip | | |

The 'LanguageMenu' task will play all different languages of a 'speech' configuration file one after the other. It allows the customer to use DTMF keys to select one of the languages. A second configuration file 'menuRepeat' may be specified with a repetition message that will be played if the user does not select a language within the defined timeout configuration 'menuRepeatTO'. The 'excOnInvKey' specifies an exception when a wrong key is pressed. When specified, a separate flow may be started.

The 'menu' task will play the 'speech' configuration file. Thereafter, the task waits for a particular DTMF key. A second speech configuration file 'repeat' can be specified with a repetition message that will be played if the customer does not select an available option within the defined timeout configuration 'repeatTO'. If the customer selects an option that is not allowed, the task continues waiting for a new key. The exception 'excOnInvKey' can be used to stop the menu selection process and end with a polite goodbye message.

The 'PlayMessage' task plays a speech configuration file to the customer.

The 'GetCode' task plays the 'speech' configuration file. Thereafter, it will wait for a particular DTMF key. The speech artifact could be as follows: "Please enter your ticket id, followed by the # key. In case of error, press the * key and start entering your ticket id again." The customer can use DTMF keying to form the code, and indicate the end of the code entry with the '#' key. If he pressed the '*' key, the entered code is cleared and a new code can be entered. A repeat message can be configured at regular (repeatTO) intervals to remind the customer to complete the code entry. The standard Timeout events can be used to prevent infinite waiting when the caller does not finalize the code entry.

The 'RecordSpeech' task makes it possible to update speech configuration files. It may work on an existing speech configuration files that can be created with an initial message, or an empty one. The maximum duration, and so also the maximum size of the recording, can be limited by using the standard Timeout on this task. If the timeout expires before the end of recording key is pressed, the speech configuration file will not be updated. If a language is selected that does not exist yet in the speech configuration files, this extra language will be added when the recording is successful.

The 'Voicemail' task connects the customer with a voice mailbox allowing him to leave a voice message. The message will be temporary stored until the end of the particular flow. It is up to the designer of the CIP application to make sure the voicemail is preserved if required.

The 'SetListenable' task enables the 'Listening, whispering and coaching' functionality for this customer. The flag 'isListenable' will be set to 'true'.

The task 'SetSurveyable' enables the 'Customer Survey' functionality for this caller, which means that it is possible to start a dialog with the customer after the 'transfer' task in the flow. The flag 'isSurveyable' will be set to 'true'.

The task 'SetRecordable' enables the recording functionality for the conversation. The agent will have the possibility to start and stop recording in the agent client. The flag 'isRecordable' will be set to 'true'. The task 'StartRecording' will start the recording for the conversation with the caller. This task is only allowed when the 'SetRecordable' task was executed earlier in the flow. The task 'StopRecording' stops the recording for the conversation with the caller. This task will only be allowed when the 'StartRecording' task was executed earlier in the flow.

The 'Transfer' task connects the caller or customer to a client agent and thus an operator by given the 'Clip', i.e., contact number of phone number of the agent. The standard Timeout task can be used to monitor the duration of the transfer, and limit it if this is required.

For outbound interaction types, the 'PlayMessageToAgent' task is further available from the voice interaction module as listed in the table below. This task will play a speech configuration file to the agent. This task is only available in predictive outbound interaction flows, and allows spoken information to be given to an operator before the 'Transfer' to the customer, but after the agent was found by the 'CC/route' task (see below).

**Table 4: Task with input, output and configuration parameters available from the voice interaction module for outbound interaction types.**

| **Name** | **Input** | **Output** | **Configuration** |
|---|---|---|---|
| PlayMessageToAgent | | | speech |

### Example module 3: Contact router module

The contact router module 114 adds specific functions to support the routing of interactions to one of the client agents 130-132. Several tasks are available from the library memory store 111 to interact with the contact router module 114 as listed in the table below.

**Table 5: Task with input, output and configuration parameters available from the contact router module.**

| **Name** | **Input** | **Output** | **Configuration** |
|---|---|---|---|
| Select | | | Contact router |
| SelectQueue | | | queue |
| GetQueue | | queue | |
| SelectSkills | | | skills |
| SetSkills | skills | | |
| GetSkills | | skills | |
| SetProperty | value | | property |
| GetProperty | | value | property |
| GetAvailableAgents | | available | |
| GetFreeAgents | | free | |
| Route | clip | | |

In an installation with multiple contact routers, the 'Select' task allows selecting a particular 'Contact router'. From then on in the flow, all the other contact router related tasks work in the context of the selected contact router. When there is only one contact router, the selection is also not necessary.

The 'SelectQueue' task lets the designer choose a suitable 'queue' for the selected contact router. The 'GetQueue' task then retrieves the 'queue' for the current contact router so that this information can be used in the flow logic.

In a skill based contact router, the 'SelectSkills' task selects one or more skills for this interaction. If this task is used more than once in one flow, the selection of the skills by the previous task instance will be overwritten. 'The SetSkill' task then allows setting a skill that is specified as input parameter if it exists in the context of the currently selected contact router. When the 'skill' is not known, an 'UnkownSkill' exception may be thrown. Similary, the 'GetSkills' task retrieves a separated list of all skill for the current interaction process. This may for example be used to test the presence of a particular skill in an exclusive gateway.

The 'SetProperty' task set the 'value' of a 'property' of an interaction process. If the property already exists, the property will be updated, otherwise a new one is created. This task allows the CIP application designer to set a contact property. Similarly, the 'GetProperty' task will retrieve the value of a specific property.

The 'GetAvailableAgents' task returns the number of 'available' agents in the current queue. An agent is considered available when he is logged on for the current queue. The 'GetFreeAgents' task returns the number of 'free' agents in the current queue. An agent is considered free when he is available but not in a conversation.

While the previous task allow configuring the contact router, the 'Route' task is the core task of the contact router module and returns a suitable agent, based on the selected queue and skills. It returns the 'clip', i.e., phone number, of the agent so that the customer can be transferred to this agent by the 'Transfer' task as defined in Table 3. Again, the standard Timeout task may be used to monitor the duration of the routing, and limit it if required.

### Example module 4: External module

External modules 116 may be created to make functionality from logic resources that are not part of the customer interaction centre 100 available to the designer of the CIP application in the form of new tasks. Such an external module may for example connect to a third party Customer relationship management or CRM system or to an Enterprise resource planning or ERP system. This way, tasks such as 'getAccountNameByClip' and 'getAccountNameByEmailAddress' may be made available through the external module. Such tasks would allow a CIP application designer to get account information based on a CLIP for inbound voice interaction types or based on an email address for inbound email interaction types.

### Examples of CIP applications for a CIC

By having a customer interaction process defined by a CIP application using predefined tasks, a business person with no technical knowledge in the configuration of customer interaction centres may define a customer interaction process. Moreover, the CIP application can even be defined when the CIC 100 is not yet operational. It suffices to know which modules will be provided and to have the specification of all the tasks offered by the modules. The implementation of the tasks that will be stored in the library memory store 111, may be done at a later moment. The other way around, CIP applications and thus customer interaction processes may be added or modified without intervention of a technically skilled person.

For the design of the CIP application, a graphical design interface may be provided allowing to draw the CIP applications using a subset of the BPMN. Depending on which modules are available, the CIP application designer can choose from a selection of tasks.

Fig. 5 illustrates a graphical representation of a CIP application 500 using the subset of the BPMN notation as explained before. The use-case interacts with the voice interaction module 101 and contact router module 114 in order to make routing decisions for an incoming or inbound voice interaction request 501. The 'PlayMessage' task 502 plays a welcome message by using a predefined 'speech file'. This speech file is one of the configurations as described in Table 3 and is selected by the CIP application designer when the task is introduced in the CIP application. Then, a message is played to explain the different menu selections by the 'menu' task 503, e.g., "1 for support, 2 for commercial" and the DTMF keys are read until a valid key, i.e., 1 or 2, is pressed. The result is stored in the default 'result' output variable. Then, the flow arrives at the exclusive gateway 504. This gateway reacts by default on the 'result' variable of the previous task and thus choses between the 'support' path 505 and the 'commercial' path 506 as selected from the 'menu' task 503. In the support path 505, the first subprocess 'GetVerifiedCode' 507 queries the caller to enter a numeric ticket ID, verifies it with the trouble ticketing system and returns the resulting code by default in a 'code' variable. The 'CC/SetProperty' task 508 sets the retrieved ticket ID as a contact router property 'TicketID' where 'CC' refers to tasks of the contact router module. The 'CC/SelectQueue' task 509 selects the queue 'TechSupport'. The 'CC/Route' task 510 starts the routing in the contact router for the selected queue. This task will return when a suitable agent has been found and stores the agent's CLIP in a variable 'agent'. When the agent has been found, the 'Transfer' task 511 connects the caller to the agent. The task will check flags to see how the transfer should be handled and will decide to use either tromboning, i.e., to keep the call in a conference when a VoiceXML engine is used in the voice interaction module, or to use path replacement, i.e., to make the transfer in a PBX, when transferring.

In the 'commercial' path 506, the 'CC/SelectQueue' task 512 selects the queue 'Commercial' for the current contact router module and then the 'CC/GetFreeAgents' task 513 gets the number of free agents for the selected queue and stores the number in the 'result' variable. The flow then arrives at the exclusive gateway 514. This gateway 514 reacts by default on the 'result' variable and choses between the case where there are no agents available or there are. If no agents are available, then a message "No agents free, we will connect you to voice mail" is played by the 'PlayMessage' task 515. Thereafter, the 'VoiceMail' task 516 connects the caller to the voice mail. If there are agents available, the 'CC/Route' task 517 starts the routing in the contact router for the selected queue. This task returns when a suitable agent has been found and stores the agent's CLIP in the variable 'agent'. Thereafter, the 'Transfer' task 518 instructs the voice interaction module to transfer the caller to the agent.

Fig. 6 shows a suitable computing system 600 as an embodiment of the controller 113, the memory stores 110, 111 and 112, the modules 101, 102, 103, 114, 115 and 116. Computing system 600 may in general be formed as a suitable general purpose computer and comprise a bus 610, a processor 602, a local memory 604, one or more optional input interfaces 614, one or more optional output interfaces 616, a communication interface 612, a storage element interface 606 and one or more storage elements 608. Bus 610 may comprise one or more conductors that permit communication among the components of the computing system 600. Processor 602 may include any type of conventional processor or microprocessor that interprets and executes programming instructions. Local memory 604 may include a random access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator to input information to the computing device 600, such as a keyboard 620, a mouse 630, a pen, voice recognition and/or biometric mechanisms, etc. Output interface 616 may comprise one or more conventional mechanisms that output information to the operator, such as a display 640, a printer 650, a speaker, etc. Communication interface 612 may comprise any transceiver-like mechanism such as for example one or more Ethernet interfaces that enables computing system 600 to communicate with other devices and/or systems, for example mechanisms for communicating with the interaction modules 101, 102 and 103 or with the modules 114 and 116. The communication interface 612 of computing system 600 may be connected to such another computing systems by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage elements 608 above is described as a local disk, in general any other suitable computer-readable media such as a removable magnetic disk, optical storage media such as a CD or DVD, -ROM disk, solid state drives, flash memory cards, ... could be used. The system 600 described above can also run as a Virtual Machine above the physical hardware.

The steps performed by the controller 113 illustrated in the embodiment of Fig. 4 can be implemented as programming instructions stored in local memory 604 of the computing system 600 for execution by its processor 602. Alternatively the instructions can be stored on the storage element 608 or be accessible from another computing system through the communication interface 612.

The library memory store 111 may be implemented by the storage element 608 wherein the executable instructions to perform the tasks of a CIP application are stored on the storage element 608. The service memory store and CIP application memory store 112 may also be implemented by the storage element 112. The CIP applications are then stored on the storage element 608 and retrieved by the processor 602 when a CIP application is to be executed to perform a customer interaction process. Memory stores 110, 111 and 112 may also be accessible by the computing system 600 over the external interface 612.

The functionality of modules 101, 102, 103, 114, 115 and 116 may be implemented as executable instructions executable on the processor 602 and stored on the storage element 608. Alternatively, any of the modules may be implemented on separate external computer systems which are accessible the system 600 over the external communication interface 612.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A customer interaction centre (100) for establishing and conducting customer interaction processes or CIPs with customers (135, 136) comprising:
- one or more interaction modules (101, 102, 103) each configured to establish or accept a connection of a certain interaction type with said customers, and to connect said customers further to client agents; and
- said client agents (130, 131, 132) providing communication means for said interaction types to operators (140, 141, 142); and
- an application memory store (112) storing predefined customer interaction process or CIP applications (500); and wherein a CIP application (500) represents a customer interaction process by a related listing of tasks (502-518, 208); and
- a library memory store (111) storing executable implementations of said tasks;
- a run-time controller (113) configured to:
o receiving (401) an interaction request for initiating an interaction between a first customer and one of said operators ; and then
o retrieving (404) a first CIP application for a first interaction type from said application memory store (112); and
o fetching (405) select tasks of said first CIP application from said library memory store (111) and executing said select tasks as determined by said related listing; and wherein a first task (511, 518) of said select tasks comprises connecting said first customer with a select client agent by a first interaction module.

2. A customer interaction centre (100) according to claim 1 wherein said interaction modules (101, 102, 103) comprise:
- a voice interaction module (101) for a voice interaction type; and/or
- a mail interaction module (102) for a mail interaction type; and/or
- a chat interaction module (103) for chat interaction type; and/or
- a messaging interaction module for a short message interaction type; and/or
- a social media interaction module for interaction through social media service providers.

3. A customer interaction centre (100) according to claim 1 or 2 wherein said first interaction module is configured to receive customer initiated interaction requests of a first interaction type from said customers; and wherein said run-time controller is further adapted to:
- receive (401) said first interaction request as a first customer initiated interaction request of said first customer from said first interaction module together with addressing information;
- identify (403) said first CIP application from a memory store (110) listing customer interaction processes for different interaction types and for different addressing information.

4. A customer interaction centre (100) according to claim 3 wherein said addressing information comprises a source address of said customer and/or a destination address of said interaction request.

5. A customer interaction centre (100) according to any one of the preceding claims wherein said tasks further comprise:
- configuration parameters; and/or
- input parameters; and/or
- output parameters.

6. A customer interaction centre (100) according to any one of the preceding claims wherein said customer interaction process application further comprises global variables; and wherein said executing further comprises:
- keeping track of said global variables;
- providing one of said global variables or one of said output parameters as input parameters to one or more of said select tasks.

7. A customer interaction centre (100) according to any one of the preceding claims further comprising:
- a contact router adapted to select an available client agent (130, 131, 132);
and wherein said select tasks comprise a second task (517) to query said contact router for said select agent.

8. A customer interaction centre (100) according to any one of the preceding claims wherein said first interaction module (101, 102, 103) is adapted to provide automated responses to customers; and wherein said select tasks comprise a third task (502) to provide an automated response to said first customer.

9. A computer implemented method for establishing and conducting a customer interaction processes (CIP) with customers (135, 136) in a customer interaction centre; comprising:
- receiving (401) an interaction request (501) for initiating an interaction between a first customer and one of operators; and wherein one or more interaction modules (101, 102, 103) in said customer interaction centre are configured to establish or accept a connection of a certain interaction type with said customers and to connect said customers further to client agents (130, 131, 132) providing communication means for said interaction types to said operators (140, 141, 142);
- retrieving (404) a first CIP application (500) for a first interaction type from an application memory store (112) storing predefined customer interaction process or CIP applications; and wherein a CIP application (115) represents a customer interaction process by a related listing of tasks (502-518); and
- fetching (405) select tasks of said first CIP application from a library memory store (111) storing executable implementations of said tasks; and
- executing (405) said select tasks as determined by said related listing; and wherein a first task (511, 518) of said select tasks comprises connecting said first customer with a select client agent by a first interaction module.

10. A computer program product comprising computer-executable instructions for performing the method according to claim 9 when the program is run on a computer.

11. A computer readable storage medium comprising the computer program product according to claim 10.

12. A data processing system programmed for carrying out the method according to claim 9.
